# EUROPÄISCHE PATENTSCHRIFT

(11) **EP 2 097 723 B1**
(45) Veröffentlichungstag und Bekanntmachung des Hinweises auf die Patenterteilung: **20.09.2017**
(21) Anmeldenummer: 08716637.7
(22) Anmeldetag: 19.03.2008
(51) Int. Cl.: G01G 23/01, G01G 11/04

(54) **VERFAHREN ZUR PARAMETRIERUNG UND ZUM BETRIEB VON WAAGEN**
METHOD FOR THE PARAMETERIZATION AND OPERATION OF WEIGHING SCALES
PROCÉDÉ POUR LE PARAMÉTRAGE ET L'UTILISATION DE BALANCES

(30) Priorität: 20.03.2007 DE 102007013333
(43) Veröffentlichungstag der Anmeldung: 09.09.2009
(73) Patentinhaber: Bizerba SE & Co. KG, 72336 Balingen (DE)
(72) Erfinder: PFAU, Helmut, 72411 Bodelshausen (DE)
(74) Vertreter: Manitz Finsterwald Patentanwälte PartmbB
(86) Internationale Anmeldenummer: PCT/EP2008/002219
(87) Internationale Veröffentlichungsnummer: WO 2008/113584

(56) Entgegenhaltungen:
- EP-A- 1 450 144
- EP-A- 1 625 367
- WO-A-2005/111554
- GB-A- 2 287 541
- JP-A- 57 045 414

## Beschreibung

Die vorliegende Erfindung betrifft ein Verfahren zur Parametrierung und zum Betrieb von Waagen, welche ein Wägeband zum Wiegen von in einem Förderprozess befindlichen Produkten aufweisen.

Derartige Waagen werden beispielsweise als Checkweigher eingesetzt, mit denen innerhalb kürzester Zeit das Gewicht von im Wesentlichen gewichtsgleichen Produkten bestimmt werden kann, die in einem Förderprozess mit hoher Geschwindigkeit aufeinander folgen, um auf diese Weise beispielsweise sicherzustellen, dass die bestehende EU-Fertigpackungsverordnung eingehalten wird. Weiterhin werden solche Waagen auch in Verbindung mit Preisauszeichnungssystemen verwendet, bei denen ebenfalls innerhalb sehr kurzer Zeit jeweils das individuelle Gewicht aufeinander folgender, in der Regel unterschiedliche Gewichte aufweisender Produkte möglichst genau bestimmt werden muss.

Ein Ziel besteht grundsätzlich darin, einen möglichst hohen Produktdurchsatz zu erzielen, wobei hierunter das Verhältnis Bandgeschwindigkeit zu Wägebandlänge verstanden wird. Das Wägeband, in dessen Bereich der Wiegevorgang stattfindet, ist üblicherweise in einen normalen Produktförderprozess eingebunden, was bedeutet, dass es ein- und auslaufseitig jeweils an ein weiteres Förderband angrenzt.

Üblicherweise werden Waagen der genannten Art an ihrem jeweiligen Standort zum Wiegen von Produkten eingesetzt, die in voneinander verschiedenen Produktionsprozessen gewonnen werden und die sich dementsprechend voneinander unterscheiden. So kommt es beispielsweise vor, dass an einem Arbeitstagnur Produkte eines ersten Produkttyps mit einem Nenngewicht von 100g und einer Länge von 10 cm gewogen werden, woraufhin an einem anderen Arbeitstag Produkte eines zweiten Produkttyps mit einem Nenngewicht von 150g und einer Länge von 14 cm gewogen werden.

Nachteilig an den Waagen gemäß Stand der Technik ist die Tatsache, dass sie für jeden, z.B. durch Nenngewicht und Produktabmessung gekennzeichneten Produkttyp oder für eine Erhöhung der Wägebandgeschwindigkeit und damit des zu erzielenden Durchsatzes separat eingestellt und in Gegenwart eines Eichbeamten neu geeicht werden müssen. Auch wenn es bei Waagen gemäß Stand der Technik möglich ist, von einem Eichbeamten geprüfte Einstellungen in Form von Parameterdatensätzen für unterschiedliche Produkttypen abzuspeichern und je nach Bedarf zu aktivieren, verbleibt das Problem, dass beim Wiegen neuer Produkttypen oder bei einer Erhöhung der Wägebandgeschwindigkeit der Eichbeamte wiederum vor Ort erscheinen muss, um einen entsprechenden, neuen Parameterdatensatz zu zertifizieren.

Das Dokument GB 2 287 541 A offenbart ein Verfahren zur Parametrierung von Waagen, welche ein Wägeband zum Wiegen von in einem Förderprozess befindlichen Produkten aufweisen. Bei dem Verfahren werden in einem ersten Schritt produktspezifische Daten, insbesondere in Form einer Fördergeschwindigkeit oder einer Produktlänge, in eine Kotrolleinheit eingegeben, die zur Ermittlung von Steuerparametern herangezogen werden. In einem zweiten Schritt wird zumindest ein Produkt dynamisch bei laufendem Wägeband gewogen und automatisiert wird eine an das jeweilige Produkt angepasste und auf den zeitlichen Verlauf eines Gewichtssignals anzuwendende Filterfunktion bestimmt.

Eine Aufgabe der Erfindung besteht darin, ein Verfahren zur Parametrierung von Waagen bereitzustellen, welches es erlaubt, eine Waage auf einen neuen Produkttyp einzustellen, ohne dass eine Überprüfung durch einen Eichbeamten nötig ist, wobei allerdings dennoch sichergestellt werden soll, dass vorgeschriebene Fehlertoleranzen zuverlässig und zwingend eingehalten werden.

Diese Aufgabe wird durch ein Verfahren der eingangs genannten Art gelöst, bei dem
- in einem ersten Schritt produktspezifische Daten in eine Kontrolleinheit eingegeben werden, die zur Ermittlung von Steuerparametern herangezogen werden,
- in einem zweiten Schritt automatisiert eine an das jeweilige Produkt angepasste und auf den zeitlichen Verlauf eines Gewichtssignals anzuwendende Filterfunktion bestimmt und zumindest ein Produkt statisch bei stillstehendem Wägeband und dynamisch bei laufendem Wägeband gewogen wird,
- in einem dritten Schritt mittels des Wiegens von Produkten automatisch verifiziert wird, ob die unter Verwendung der zuvor ermittelten Steuerparameter und der zuvor bestimmten Filterfunktion erhaltenen Gewichtswerte innerhalb vorgegebener Toleranzen liegen,
- wobei nur bei positiv verlaufener Verifizierung in der Kontrolleinheit ein gegen Manipulation gesicherter Datensatz gespeichert wird, welcher zumindest die Steuerparameter, die Filterfunktion und eine Produktkennung umfasst.

Erfindungsgemäß wird also ein neuer Produkttyp im ersten Schritt durch die insbesondere manuelle Eingabe von produkttypspezifischen Daten definiert, woraufhin in einem zweiten Schritt ein Teach-Vorgang abläuft, im Rahmen dessen eine mathematische oder elektronische Filterfunktion bestimmt wird, die den zeitlichen Verlauf der beim anschließenden Normalbetrieb der Waage ermittelten Gewichtssignale in sinnvoller Weise glättet.

Nach diesem zweiten Schritt überprüft bei Waagen gemäß Stand der Technik üblicherweise der Eichbeamte, ob beim Betrieb der Waage mit der ermittelten Filterfunktion und den ermittelten Steuerparametern vorgegebene Toleranzen eingehalten werden. Erfindungsgemäß wird dies nun im Wesentlichen durch den zwingend geforderten, automatisch gesteuerten dritten Schritt der Parametrierung überflüssig gemacht, im Rahmen dessen verifiziert wird, ob die vorgegebenen Toleranzen eingehalten werden. In diesen Verifizierungsprozess kann manuell nicht manipulierend eingegriffen werden, so dass sichergestellt ist, dass dieser Prozess immer in der gleichen, fest vorgegebenen zeitlichen Abfolge abläuft. So wird auch sichergestellt, dass jede für die Verifizierung erforderliche Aktion tatsächlich durchgeführt wird, woraufhin dann wiederum automatisch, ohne manuelle Eingriffsmöglichkeit, beurteilt wird, ob die Verifizierung erfolgreich war oder nicht. Nur im Falle einer erfolgreichen Verifizierung wird dann in der Kontrolleinheit der Waage ein Datensatz automatisch gespeichert, welcher zumindest die Steuerparameter, die Filterfunktion und eine Produktkennung umfasst. Wenn dieser Datensatz dann später beim Betrieb der Waage aktiviert wird, ist sichergestellt, dass die eingestellten Steuerparameter sowie die eingestellte Filterfunktion einen ordnungsgemäßen Betrieb der Waage innerhalb der vorgegebenen Toleranzen für den jeweiligen Produkttyp gewährleisten, da genau diese Parameter im Rahmen der Parametrierung zuvor verifiziert wurden.

Wichtig ist, dass der in der Kontrolleinheit gespeicherte Datensatz gegen Manipulationen gesichert wird, so dass gewährleistet ist, dass die Waage tatsächlich auch nur mit zuvor verifizierten Parametern und nicht etwa mit veränderten Parametern betrieben werden kann. So wird zum Beispiel zuverlässig verhindert, dass eine zuvor eingegebene Fördergeschwindigkeit oder ein zuvor eingegebener Durchsatz unter Inkaufnahme von unzulässigen Fehlern nachträglich erhöht wird, um so die Produktgeschwindigkeit an der Waage in unlauterer Weise zu erhöhen.

Die Kontrolleinheit kann fest mit der Waage verbunden sein, wobei ein Betrieb der Waage nur dann zugelassen wird, wenn eine ordnungsgemäße Verbindung zwischen Kontrolleinheit und Waage vorhanden ist. Die Verbindung von Kontrolleinheit und Waage kann in diesem Fall elektronisch und/oder mechanisch ausgeführt sein. Das Vorhandensein einer elektronischen Verbindung kann dann mittels einer Prüfroutine auf Vorhandensein der Verbindung und/oder auf Funktion der Kontrolleinheit geprüft werden, indem z.B. die Waage beim Einschalten und/oder während des Betriebs periodisch eine in der Kontrolleinrichtung nicht veränderbar abgespeicherte Prüfsumme oder einen entsprechenden Prüfcode abfragt. Bei nicht korrekt an die Waage übermittelter Prüfsumme oder nicht korrektem Prüfcode kann beispielsweise eine automatisch generierte Fehlermeldung erfolgen oder ein Betrieb der Waage verhindert werden.

Falls eine mechanische Verbindung zwischen Waage und Kontrolleinrichtung über feste Verbindungselemente (z.B. Schrauben, Nieten, Klammern) vorgesehen wird, kann diese mittels eines Siegels gegen Lösen gesichert sein. Besonders bevorzugt ist es natürlich, wenn die Kontrolleinrichtung im Waagengehäuse selbst untergebracht ist.

Eine korrekte Parametrierung inklusive Verifizierung kann insbesondere dadurch erreicht werden, dass die einzelnen Parametrierungsschritte interaktiv in einer beispielsweise durch ein Programm vorgegebenen, von der Kontrolleinheit somit erzwungenen Reihenfolge durchgeführt werden, ohne dass eine Bedienperson an dieser Reihenfolge Änderungen vornehmen kann.

Die im ersten Schritt einzugebenden produktspezifischen Daten können ein Nenngewicht oder einen Nenngewichtsbereich, eine Fördergeschwindigkeit bzw. einen Produktdurchsatz, eine Produktlänge, eine Produktlängentoleranz und/oder eine Produktkennung umfassen. Die Eingabe eines Nenngewichts ist insbesondere bei einem Checkweigher sinnvoll, bei dem viele aufeinander folgende Produkte gewogen werden sollen, die untereinander ein möglichst identisches Gewicht aufweisen. Ein Nenngewichtsbereich hingegen wird bevorzugt bei der Verwendung einer Waage in Verbindung mit einem Preisauszeichnungssystem eingegeben, da hier in der Regel aufeinander folgende Produkte gewogen werden, die teilweise erheblich voneinander abweichende Gewichte aufweisen, wobei der Preis jeweils in Abhängigkeit vom bestimmten Gewicht ermittelt wird. Es ist bei einem Preisauszeichner jedoch ebenso möglich, anstelle eines Nenngewichtsbereichs ein mittleres Nenngewicht einzugeben und anschließend während des erfindungsgemäßen zweiten und/oder dritten Schritts empirisch die Ober- und Untergrenzen des Nenngewichtsbereichs anhand der im zweiten und/oder dritten Schritt gewogenen Produkte zu ermitteln.

Grundsätzlich können im Rahmen der Erfindung auch weniger als die vorstehend genannten produktspezifischen Daten eingegeben werden. Ebenso ist es aber auch möglich, zusätzliche produktspezifische Daten wie zum Beispiel das Volumen, die Produktbreite, die Produkthöhe, das spezifische Gewicht oder den Typ der jeweiligen Verpackung einzugeben. Alle eingegebenen Daten können für die im zweiten Schritt erfolgende Bestimmung der jeweils optimalen Filterfunktion herangezogen werden.

Während des zweiten Schritts, insbesondere zu Beginn des zweiten Schritts, wird ein Produkt statisch, das heißt bei stillstehendem Wägeband, und zusätzlich auch dynamisch, das heißt bei laufendem Wägeband, gewogen. Durch das statische Wiegen lässt sich das Gewicht des jeweiligen Produktes exakt bestimmen, da Verfälschungen durch Produktbewegungen oder durch beim Fördern von Produkten auftretende sonstige, auf das Produkt wirkenden Kräften (zum Beispiel Auftriebskräften) vollständig vermieden werden. Insofern wird beim statischen Wiegen ein korrekter Gewichtswert ermittelt, der dann mit den beim dynamischen Wiegen ermittelten Gewichtswerten, die in der Regel eine gewisse Streuung um den korrekten Gewichtswert aufweisen, verglichen werden kann.

Um sicherzustellen, dass die während der Durchführung des zweiten Schritts gegebenen Bedingungen denjenigen Bedingungen entsprechen, die beim normalen Betrieb der Waage nach deren Parametrierung gelten, wird das Wägeband beim dynamischen Wiegen vorzugsweise mit der im ersten Schritt eingegebenen Fördergeschwindigkeit betrieben. So wird sichergestellt, dass die beim dynamischen Wiegen auftretenden Produktbewegungen und Kräfte denjenigen entsprechen, die anschließend auch beim normalen Betrieb auftreten.

Besonders vorteilhaft ist es, wenn während des zweiten Schritts ein Produkt einmal statisch bei stillstehendem Wägeband und mehrmals dynamisch bei laufendem Wägeband gewogen wird. Ein einmaliges statisches Wiegen genügt, um einen korrekten Gewichtswert zu erhalten. Ein mehrmaliges dynamisches Wiegen ermöglicht es, die dabei ermittelten Gewichtswerte statistisch auszuwerten und besonders gut auf ihre Zuverlässigkeit hin zu überprüfen. Es lässt sich so also ein typischer Verlauf der beim dynamischen Wiegen gewonnen Gewichtssignale ermitteln, so dass anschließend die jeweils am besten geeignete Filterfunktion in Abhängigkeit von diesem typischen zeitlichen Verlauf und den eingegebenen produktspezifischen Daten bestimmt werden kann.

Eine besonders gute Ermittlung der am besten geeigneten Filterfunktion ist dann bewerkstelligbar, wenn während des zweiten Schrittes nicht nur ein, sondern zwei bis zehn, insbesondere zwei bis vier Produkte den genannten Wiegeprozessen unterzogen werden, wobei diese Produkte hinsichtlich Gewicht und Form bzw. Länge möglichst verschieden voneinander sein sollten. So können typische Gewichtssignalverläufe erhalten werden, die hinsichtlich Gewicht und Form bzw. Länge der Produkte das gesamte Spektrum des jeweils in Frage kommenden Produkttyps abdecken. Insbesondere wenn eine Waage mit einem Preisauszeichnungssystem verwendet werden soll, welches anstelle eines bestimmten Nenngewichts einen Nenngewichtsbereich zulässt, ist es sinnvoll, im zweiten Schritt eine Mehrzahl von Produkten zu wiegen, deren Gewicht diesen gesamten Nenngewichtsbereich abdeckt.

Bei der Bestimmung der optimierten Filterfunktion am Ende des zweiten Schritts kann auf aus dem Stand der Technik bekannte Verfahren zurückgegriffen werden, wie sie z.B. in den Dokumenten EP 1 625 367 B1, EP 1 416 631 A2 und EP 1 363 112 A1 beschrieben sind.

Nach Abschluss des zweiten Schritts, der im Wesentlichen dazu dient, im Rahmen eines Teach-Verfahrens die jeweils optimale Filterfunktion für einen Produkttyp zu ermitteln, wird der erfindungsgemäß zwingend geforderte dritte Schritt ausgeführt, im Rahmen dessen verifiziert wird, ob mit der ermittelten Filterfunktion und den sonstigen eingestellten Steuerparametern, insbesondere der eingestellten Fördergeschwindigkeit bzw. dem eingestellten Durchsatz, zuverlässige und korrekte Gewichtswerte, die sich innerhalb der vorgegebenen Fehlertoleranzen bewegen, ermittelt werden können.

Analog zum zweiten Schritt ist es bevorzugt, wenn auch während des dritten Schritts zumindest ein Produkt statisch und dynamisch gewogen wird, wobei das Wägeband beim dynamischen Wiegen wiederum insbesondere mit der im ersten Schritt eingegebenen Fördergeschwindigkeit betrieben wird.

Auch im dritten Schritt ist es sinnvoll, ein Produkt einmal statisch und mehrmals dynamisch zu wiegen, wobei sich erwiesen hat, dass das zehnmalige dynamische Wiegen eine sinnvolle Streuung der ermittelten Gewichtsverläufe liefern kann. Es kann aber ohne weiteres auch mehr oder weniger als zehnmal dynamisch gewogen werden.

Analog zum zweiten Schritt werden auch im dritten Schritt zwei bis zehn, insbesondere zwei bis vier unterschiedliche Produkte statisch und dynamisch gewogen, wobei auch diese Produkte wieder möglichst große Unterschiede hinsichtlich ihres Gewichts und ihrer Form bzw. ihrer Länge aufweisen sollen.

Hinsichtlich der Anzahl der im zweiten und/oder dritten Schritt gewogenen Produkte und der Anzahl der dynamischen Wiegungen jedes dieser Produkte ist darauf zu achten, dass das Produkt aus beiden Anzahlen einerseits so groß ist, dass sich sinnvolle statistische Berechnungen durchführen lassen und andererseits so klein ist, dass der dritte Schritt nicht zu viel Zeit beansprucht. Um dies zu erreichen ist es sinnvoll, wenn das Produkt aus beiden Anzahlen Werte zwischen 10 und 200, insbesondere zwischen 20 und 40 annimmt.

Bevorzugt ist es, wenn für die mit den dynamischen Wiegevorgängen des dritten Schritts bestimmten Gewichtswerte Standardabweichung und/oder Mittelabweichung ermittelt werden und/oder wenn für die mit den dynamischen Wiegevorgängen des dritten Schritts bestimmten Gewichtswerte ermittelt wird, ob sie innerhalb fest vorgegebener Eichfehlergrenzen liegen.
So kann am Ende des dritten Schritts festgestellt werden, ob die ermittelten Standardabweichungen und/oder Mittelabweichungen und/oder Gewichtswerte innerhalb vorgegebener Grenzwerte liegen. Wenn bei dieser Überprüfung festgestellt wird, dass dies der Fall ist, so bedeutet dies, dass die Verifizierung positiv verlaufen ist, was dann zur Folge hat, dass in der Kontrolleinheit der Waage ein gegen Manipulation gesicherter Datensatz gespeichert wird, welcher zumindest die auf Basis der eingegebenen produktspezifischen Daten ermittelten Steuerparameter, die im zweiten Schritt bestimmte Filterfunktion und eine Produktkennung umfasst. Dieser Datensatz kann dann zu einem späteren Zeitpunkt aktiviert werden und durch seine Aktivierung die Betriebsdaten der Waage festlegen, ohne dass ein Benutzer diese Betriebsdaten verändern kann.
Wenn am Ende des dritten Schritts allerdings festgestellt wird, dass die ermittelten Standardabweichungen und/oder Mittelabweichungen außerhalb der vorgegebenen Grenzwerte liegen, wird in der Kontrolleinheit kein Datensatz gespeichert, der anschließend zum Betrieb der Waage verwendet werden kann. Es muss vielmehr eine erneute Parametrierung durchgeführt werden, da Datensätze, die zum normalen Betrieb der Waage verwendet werden können, grundsätzlich nur dann in der Kontrolleinheit gespeichert werden, wenn die Verifizierung im Rahmen der Parametrierung zu einem positiven Ergebnis geführt hat.

Besonders vorteilhaft ist es, wenn der in der Kontrolleinheit gespeicherte und gegen Manipulation gesicherte Datensatz bei Bedarf lediglich unaktivierbar gemacht, jedoch nicht vollständig gelöscht werden kann. Auf diese Weise kann erreicht werden, dass beispielsweise ein Eichbeamter zu beliebigen Zeitpunkten alle Datensätze überprüfen kann, die jemals als positiv verifiziert gespeichert wurden, was letztlich bedeutet, dass die gesamte "Parametrierungshistorie" einer Waage dauerhaft zur Verfügung steht. Insbesondere wird eine solche Parametrierungshistorie separat für jeden Produkttyp gespeichert, so dass zumindest nachvollzogen werden kann, zu welchen Zeitpunkten der für einen jeweiligen Produkttyp geltende Datensatz jeweils über eine neue Parametrierung geändert wurde. In diesem Fall können dann alle früheren, auf den jeweiligen Produkttyp bezogenen Datensätze zwar noch überprüfbar sein, aktivierbar ist jedoch nur der zuletzt für den Produkttyp angelegte Datensatz.

Besonders vorteilhaft ist es, wenn der gegen Manipulation gesicherte Datensatz zusätzlich ein Verifizierungsdatum, einen Verifizierungszeitpunkt, eine auf die jeweilige Verifizierung bezogene laufende Nummer und/oder zumindest einen Prüfschlüssel umfasst. Durch Verifizierungsdatum, Verifizierungszeitpunkt und/oder laufende Nummer kann die Chronologie der erfolgreichen Verifizierungen insbesondere unter Zuordnung konkreter Verifizierungszeitpunkte jederzeit nachvollzogen werden. Vorteilhaft ist es, wenn der Datensatz zusätzlich einen Code beinhaltet, welcher diejenige Person identifiziert, die die jeweilige Parametrierung durchgeführt hat, da so im Nachhinein die für die Parametrierung jeweils verantwortliche Person ermittelt werden kann.
Mittels des genannten Prüfschlüssels kann sichergestellt werden, dass der gespeicherte Datensatz nachträglich nicht mehr verändert werden kann. Falls dennoch eine Veränderung am Datensatz vorgenommen wird, passt der in Abhängigkeit von den gespeicherten Daten des Datensatzes ermittelte Prüfschlüssel nicht mehr zu den gespeicherten Daten, so dass ein solcher unzulässig geänderter Datensatz erkannt und dann verworfen oder gesperrt werden kann. Mit dem genannten Prüfschlüssel kann also sichergestellt werden, dass der in der Kontrolleinheit gespeicherte Datensatz auf erfindungsgemäße Weise gegen Manipulation gesichert ist.

Eine zusätzliche Sicherheit lässt sich dadurch erreichen, dass der gegen Manipulation gesicherte Datensatz oder ein Teil desselben in einem gesicherten Speichermedium, insbesondere einem Chip gespeichert wird. Die Sicherung kann dabei auf beliebige Arten realisiert werden. Beispielsweise ist es möglich, das Speichermedium mit einem Siegel zu versehen, oder die gespeicherten Daten zu verschlüsseln oder mit einer Signatur zu koppeln. Schließlich ist es auch möglich, eine ausreichende Sicherheit nur dadurch herzustellen, dass als Speichermedium ein eingelöteter Chip verwendet wird, der aufgrund der existierenden Lötverbindungen nicht ohne weiteres entfernt werden kann.

Auf in einem solchen Speichermedium gespeicherte Daten kann nicht ohne weiteres verändernd oder löschend zugegriffen werden. Ein in einem solchen Speichermedium gespeicherter Datensatz kann - muss aber nicht - mit einem zusätzlich sichernden Prüfschlüssel versehen werden.

Es ist auch möglich, lediglich Teile des Datensatzes in einem in der beschriebenen Weise gesicherten Speichermedium zu speichern und die verbleibenden Teile des Datensatzes in einem normalen Speicher der Kontrolleinheit abzulegen, wobei diese verbleibenden Teile dann mit einem Prüfschlüssel zu sichern sind. Beispielsweise ist es sinnvoll, in dem gesicherten Speichermedium lediglich ein Verifizierungsdatum und/oder einen Verifizierungszeitpunkt und einen Verweis zu speichern, welcher eine Zuordnung zu den im normalen Speicher der Kontrolleinheit abgelegten verbleibenden Teile des Datensatzes ermöglicht, welche ihrerseits mit einem Prüfschlüssel gesichert sind.

Bei einem vorteilhaften Verfahren zum Betrieb einer erfindungsgemäß parametrierten Waage wird sichergestellt, dass die Waage ausschließlich mit gegen Manipulation gesicherten Datensätzen oder nur mit einer niedrigen, von einer Zulassungsstelle unabhängig vom jeweiligen Produkttyp zugelassenen Leistung (Durchsatz) betrieben werden kann. Der Betrieb der Waage mit von einer Bedienperson willkürlich, ohne erfindungsgemäße Parametrierung festgelegten Steuerparametern, die zu einer Leistung oberhalb der produktunabhängig zugelassenen Leistung führen, wird dabei grundsätzlich gesperrt.

Besonders komfortabel lässt sich ein Verfahren zum Betrieb einer Waage gestalten, wenn zu Beginn des normalen Betriebs derjenige gegen Manipulation gesicherte Datensatz aktiviert wird, dessen Produktkennung mit einer zu Beginn des Betriebs eingegebenen oder erfassten Produktkennung übereinstimmt. Bevorzugt wird eine solche Produktkennung mittels eines Scanners oder einer Kamera erfasst, so dass die Aktivierung des zugehörigen Datensatzes dann automatisch erfolgen kann. Wenn eine Produktkennung erfasst wird, zu der kein passender verifizierter Datensatz vorhanden ist, wird ein Betrieb der Waage nur mit einer niedrigen, von einem Eichbeamten produktunabhängig zertifizierten Leistung zugelassen.

Vorzugsweise ist vorgesehen, dass während des normalen, laufenden Betriebs nicht nur ein Produkttyp, sondern vielmehr unterschiedliche Produkttypen verarbeitet werden. Zu diesem Zweck kann der zu einem jeweiligen Produkttyp gehörige Datensatz manuell aufgerufen bzw. aktiviert werden, bevor das erste Produkt dieses Produkttyps gewogen wird. Von Vorteil ist es jedoch, wenn der zu einem Produkttyp gehörende Datensatz automatisch in Abhängigkeit von einer Produktkennung aktiviert wird, wobei sich eine solche Produktkennung bevorzugt auf dem Produkt selbst befindet. Das Produkt kann dazu einen über ein optisches Lesegerät ablesbaren Code aufweisen, z.B. einen Strichcode oder einen 2-D-Code. Ebenso kann das Produkt aber auch einen über ein elektronisches Lesegerät auslesbaren Code aufweisen, beispielsweise in Form eines RFID-Chips. Im Rahmen der automatischen Produkttyperkennung erfolgt das Umschalten zwischen verschiedenen gespeicherten Datensätzen der Produkttypen folglich automatisch während des Betriebs, ohne dass hierzu ein Anhalten des Wiegeprozesses oder ein manueller Eingriff nötig wären.

Wenn die erfindungsgemäß parametrierte Waage als Checkweigher oder in Verbindung mit einem Preisauszeichnungssystem eingesetzt wird, ist es - wie bereits erwähnt - sinnvoll, bei der Parametrierung im ersten Schritt einen Nenngewichtsbereich mit einer Obergrenze und einer Untergrenze einzugeben. Alternativ ist es auch möglich, im zweiten und/oder dritten Schritt eine Obergrenze und eine Untergrenze empirisch zu ermitteln, indem hierfür einfach die ermittelten Gewichtswerte der im zweiten und/oder dritten Schritt verwendeten leichtesten und schwersten Produkte herangezogen werden.
Der Bereich zwischen der um einen Toleranzwert verringerten Untergrenze und der um einen Toleranzwert erhöhten Obergrenze stellt dann einen auf das Gewicht bezogenen Vertrauensbereich dar, der im Rahmen der Parametrierung berücksichtigt wurde und in dem ein ordnungsgemäßer Betrieb der Waage gewährleistet ist. Beim normalen Betrieb der Waage werden dann nur diejenigen Produkte akzeptiert, deren ermitteltes Gewicht innerhalb des genannten Vertrauensbereichs liegt. Insbesondere findet ein Akzeptieren immer dann statt, wenn die Obergrenze nicht um mehr als x% überschritten oder die Untergrenze nicht um mehr als y% unterschritten wird, wobei gilt: 0 ≤ x ≤ 20 und 0 ≤ y ≤ 20. Insbesondere gilt dabei x = y.
Wenn ein Produkt nicht akzeptiert wird, kann dieses z.B. ausgeschleust werden. Ebenso ist es möglich, ein solches Produkt in geeigneter Weise zu kennzeichnen. Bei einem Preisauszeichnungssystem kann ein nicht akzeptiertes Produkt z.B. dadurch gekennzeichnet werden, dass es im Gegensatz zu den akzeptierten Produkten nicht mit einem Etikett versehen wird.

Dieser beschriebene Vorgang der Akzeptanzprüfung findet dabei statt, um sicherzustellen, dass nur solche Produkte ausgezeichnet werden, deren Gewicht in einem Bereich liegt, der zuvor im zweiten und/oder dritten Schritt, insbesondere bei der Verifizierung auch berücksichtigt wurde. Wenn nämlich zum Beispiel die Verifizierung mit einem Nenngewichtsbereich zwischen 100 g und 200 g durchgeführt wurde, kann davon ausgegangen werden, dass - im Fall von "x, y = 10" - die Waage in einem Bereich zwischen 90 g und 220 g korrekt wiegt, wobei es jedoch möglich ist, dass beispielsweise bei einem Gewicht von 300 g fehlerhafte Werte geliefert werden. Insofern ist es sinnvoll, ein derartiges Produkt, welches mehr als 220 g oder weniger als 90 g wiegt, nicht zu akzeptieren.

Alternativ oder zusätzlich zu der beschriebenen, auf das Gewicht der Produkte beschriebenen Akzeptanzprüfung kann auch eine Akzeptanzprüfung im Hinblick auf Produktabmessungen, insbesondere im Hinblick auf die Produktlänge, durchgeführt werden. Zu diesem Zweck ist es nötig, im Bereich der Waage Sensoren zur Erfassung der Abmessungen oder der Länge aller die Waage passierenden Produkte vorzusehen.

Nachfolgend wird eine Akzeptanzprüfung im Hinblick auf Produktabmessungen am Beispiel der Prüfung der Produktlänge erläutert. Alternativ oder zusätzlich können hier aber auch andere Produktabmessungen wie z.B. die Breite, die Höhe und/oder das Volumen der Produkte berücksichtigt werden.

Unterschiedliche Produktlängen treten unter anderem deshalb auf, weil Produkte auf dem Wägeband mit unterschiedlicher Winkelorientierung zu liegen kommen, so dass ihre Projektionslänge auf eine vertikale, parallel zur Förderrichtung verlaufende Ebene auch dann variiert, wenn die Produkte untereinander gleich sind. Die Produktlänge wird üblicherweise durch Lichtschranken erfasst, die beidseits eines Fördermittels angeordnet sind und deren Lichtstrahlen parallel zur Förderebene verlaufen. Solche Lichtschranken können nur die Projektionslänge der Produkte auf eine vertikale, parallel zur Förderrichtung verlaufende Ebene erfassen. Ein Produkt mit quadratischer, auf dem Wägeband aufliegender Grundfläche wird dementsprechend kürzer erscheinen, wenn die Kanten der Grundfläche parallel und senkrecht zur Förderrichtung verlaufen, und länger erscheinen, wenn die Kanten in einem Winkel von z.B. 45° zu Förderrichtung verlaufen.
Allein aufgrund der vorstehend geschilderten Tatsachen ist es bereits sinnvoll, die eingangs erwähnte Produktlängentoleranz vorzusehen.

Bei einer eine Akzeptanzprüfung im Hinblick auf die Produktlänge wird bei der Parametrierung im ersten Schritt eine Produktlänge und eine Produktlängentoleranz eingegeben, aus denen ein Längenbereich mit einer Obergrenze und einer Untergrenze berechnet werden kann. Alternativ ist es auch möglich, im zweiten und/oder dritten Schritt eine Obergrenze und eine Untergrenze empirisch zu ermitteln, indem hierfür einfach die ermittelten Längenwerte der im zweiten und/oder dritten Schritt verwendeten längsten und kürzesten Produkte herangezogen werden.
Der Bereich zwischen der um einen Toleranzwert verringerten Untergrenze und der um einen Toleranzwert erhöhten Obergrenze stellt dann einen - diesmal auf die Produktlänge bezogenen - Vertrauensbereich dar, der im Rahmen der Parametrierung berücksichtigt wurde und in dem ein ordnungsgemäßer Betrieb der Waage gewährleistet ist. Beim normalen Betrieb der Waage werden dann nur diejenigen Produkte akzeptiert, deren ermittelte Länge innerhalb des genannten Vertrauensbereichs liegt. Insbesondere findet ein Akzeptieren immer dann statt, wenn die Obergrenze nicht um mehr als x% überschritten oder die Untergrenze nicht um mehr als y% unterschritten wird, wobei wiederum gilt: 0 ≤ x ≤ 20 und 0 ≤ y ≤ 20. Insbesondere gilt dabei auch hier x = y.

Wenn ein Produkt nicht akzeptiert wird, kann dieses ebenso ausgeschleust oder gekennzeichnet werden, wie dies vorstehend bereits erläutert wurde.

Dieser beschriebene Vorgang der Akzeptanzprüfung findet in diesem Fall statt, um sicherzustellen, dass nur solche Produkte ausgezeichnet werden, deren Länge in einem Bereich liegt, der zuvor im zweiten und/oder dritten Schritt, insbesondere bei der Verifizierung auch berücksichtigt wurde. Wenn nämlich zum Beispiel die Verifizierung mit einem Längenbereich zwischen 10 cm und 15 cm durchgeführt wurde, kann davon ausgegangen werden, dass die Waage - im Fall von "x, y = 20" - Produkte mit einer Länge in einem Bereich zwischen 8 cm und 18 cm korrekt wiegt, wobei es jedoch möglich ist, dass beispielsweise bei einer Länge von 20 cm fehlerhafte Werte geliefert werden. Insofern ist es sinnvoll, ein derartiges Produkt, welches kürzer als 8 cm oder länger als 18 cm ist, nicht zu akzeptieren.

Vorteilhaft ist ferner, wenn während der Parametrierung mittels eines Temperatursensors die bei der Parametrierung gegebene Umgebungstemperatur ermittelt und ein Betrieb der Waage bei Temperaturen gesperrt wird, die außerhalb eines Vertrauens-Temperaturbereichs liegen, der die während der Parametrierung ermittelte Umgebungstemperatur einschließt. Alternativ zu der genannten Sperrung kann auch erlaubt werden, die Waage nur mit einer niedrigen, von einer Zulassungsstelle unabhängig vom jeweiligen Produkttyp zugelassenen Leistung (Durchsatz) zu betreiben.
Um hier den nötigen Temperaturvergleich durchführen zu können, muss natürlich auch während des normalen Betriebs der Waage die jeweils aktuelle Umgebungstemperatur ermittelt werden, wozu der bereits genannte, vorzugsweise in die Waage integrierte Temperatursensor herangezogen werden kann.
Die Untergrenze des genannten Vertrauens-Temperaturbereichs kann dabei x°C unterhalb der bei der Parametrierung ermittelten Umgebungstemperatur und die Obergrenze des Vertrauens-Temperaturbereichs y°C oberhalb der bei der Parametrierung ermittelten Umgebungstemperatur liegen, wobei gilt: 1 ≤ x ≤ 10 und 1 ≤ y ≤ 10 und insbesondere x = y. Ein in der Praxis besonders sinnvoller Wert für x und y beträgt 5.
Die Umgebungstemperatur kann z.B. zu jedem Zeitpunkt während des ersten, zweiten oder dritten erfindungsgemäßen Schritts ermittelt werden. Ebenso möglich ist eine Mittelung über ein Zeitintervall, welches innerhalb der Durchführung des ersten, zweiten und/oder dritten erfindungsgemäßen Schritts liegt.
Hier wird nun also hinsichtlich der Temperatur ein Vertrauensbereich geschaffen, innerhalb dessen ein ordnungsgemäßer Betrieb der Waage sichergestellt ist. Wenn dieser Bereich von der beim normalen Betrieb der Waage gegebenen Umgebungstemperatur verlassen wird, wird der Betrieb der Waage entweder gesperrt oder nur mit einer niedrigen, von einer Zulassungsstelle unabhängig vom jeweiligen Produkttyp zugelassenen Leistung (Durchsatz) erlaubt.

Ergänzend sei bemerkt, dass üblicherweise auch bereits bei der produkttypunabhängigen Zulassung einer Waage von der Zulassungsstelle ein Basis-Temperaturbereich festgelegt wird, in dem die Waage betrieben werden darf. Ein solcher, vergleichsweise großer Basis-Temperaturbereich liegt beispielsweise zwischen 0° und 40°. Innerhalb eines solchen, von der Zulassungsstelle genehmigten Basis-Temperaturbereichs darf die Waage produkttypunabhängig mit einer niedrigen, von der Zulassungsstelle unabhängig vom jeweiligen Produkttyp zugelassenen Leistung betrieben werden. Dies gilt auch dann, wenn der vorstehend erläuterte Vertrauens-Temperaturbereich verlassen wird. Mit einem erfindungsgemäß ermittelten Datensatz und einer dementsprechend höheren Leistung darf die Waage jedoch nur dann betrieben werden, wenn die beim Betrieb der Waage ermittelte Umgebungstemperatur sowohl innerhalb des Vertrauens-Temperaturbereichs als auch innerhalb des von der Zulassungsstelle zugelassenen Basis-Temperaturbereichs liegt.

Nachfolgend ist das Beispiel eines Ausdrucks dargestellt, welcher von einem an die Waage angeschlossenen Drucker erzeugt werden kann, nachdem die erfindungsgemäße Parametrierung durchgeführt wurde:

| | | |
|---|---|---|
| Teachen und Prüfung gegen Eichfehlergrenze - n nach Zulassung PTB | | |
| Prüfbescheinigung-Nr.: DE-07-MI006-PTB008 | | |
| Artikelnummer: 1 | | |
| Nenngewicht 100,0g | | |
| Geschwindigkeit 110 m/min | | |
| Packungslänge 100 mm | | |
| Toleranz Pack.-Länge 10 mm | | |
| Mindestgewicht 90,1g | | |
| Maximalgewicht 118,1g | | |
| | | |
| Standardabw. x(1): ok | | |
| Mittelabw. x(1): ok | | |
| keine Prüfung auf Y(a) | | |
| standardabw. x(1) | Ist: 0,09g | |
| • | EFG: 0,24g | |
| • | VFG: 0,30g | |
| Mittelabw. x(1) | Ist: -0,18g | |
| • | EFG: 0,25g | |
| • | VFG: 0,50g | |
| Packung Nr. 1 | Gewicht: 103,35g | |
| 103,20g | 103,20g | 103,20g |
| 103,15g | 103,20g | 103,15g |
| 103,15g | 103,15g | 103,15g |
| 103,15g | | |
| Fehlergrenzen Y(a): 102,60g - 104,10g | | |
| Packung Nr. 2 | Gewicht: 107,40g | |
| 107,20g | 107,20g | 107,15g |
| 107,15g | 107,15g | 107,15g |
| 107,10g | 107,10g | 107,05g |
| 107,05g | | |
| Fehlergrenzen Y(a): 106,65g - 108,15g | | |
| Packung Nr. 3 Gewicht: 100,10g | | |
| 100,05g | 100,00g | 100,00g |
| 100,00g | 100,05g | 100,05g |
| 100,00g | 100,00g | 100,05g |
| 100,00g | | |
| Fehlergrenzen Y(a): 99,35g - 100,85g | | |

Zu Beginn des Ausdrucks werden die im ersten erfindungsgemäßen Schritt ermittelten bzw. eingegebenen produktspezifischen Daten nochmals wiederholt. Es handelt sich dabei um eine Artikelnummer, welche eine Produktkennung darstellt, ein Nenngewicht, eine Fördergeschwindigkeit, eine Packungs- bzw. Produktlänge, eine Packungs- bzw. Produktlängentoleranz sowie um ein Mindestgewicht und ein Maximalgewicht. Mindest- und Maximalgewicht wurden während des zweiten und/oder dritten erfindungsgemäßen Schritts ermittelt und begrenzen den vorstehend bereits erläuterten, auf das Gewicht bezogenen Vertrauensbereich, was nachstehend noch erläutert wird.

Unter den genannten Daten ist kurz zusammengefasst das Ergebnis der Verifizierung gemäß des dritten erfindungsgemäßen Schritts dargestellt. Aus dem dargestellten Ausdruck ergibt sich, dass die ermittelte Standardabweichung sowie die ermittelte Mittelabweichung innerhalb der vorgegebenen Grenzwerte gelegen haben. Diese Grenzwerte sind beispielsweise für den Bereich Deutschland gesetzlich als Eichfehlergrenze (EFG) und als Verkehrsfehlergrenze (VFG) festgelegt. Im Beispielsfall des vorstehenden Ausdrucks beträgt EFG 0,24 g und VFG 0,30 g. Ermittelt wurde eine Standardabweichung von 0,09 g, also ein Wert, der kleiner als 0,24 g und auch kleiner als 0,30 g ist, so dass hier die vorgegebenen Grenzwerte eingehalten wurden.
Entsprechendes gilt für die Mittelabweichung, bezüglich derer im vorstehenden Ausdruck ebenfalls der ermittelte Wert sowie die Grenzwerte EFG und VFG angegeben sind.

Im unteren Teil des vorstehenden Ausdrucks sind drei Abschnitte enthalten, die das im dritten erfindungsgemäßen Schritt (Verifizieren) erfolgte Wiegen von drei unterschiedlichen Packungen (Nr. 1, Nr. 2 und Nr. 3) betreffen. Die dargestellten Zahlenwerte werden nachfolgend anhand der Packung Nr. 1 erläutert.

Bezüglich der Packung Nr. 1 wurde mittels eines statischen Wiegevorgangs ein korrektes Gewicht dieser Packung mit 103,35 g ermittelt. Anschließend wurden dann im Rahmen der Verifizierung zehn dynamische Wiegevorgänge durchgeführt, innerhalb derer zehn unterschiedliche Gewichtswerte im Bereich zwischen 103,15 g und 103,20 g ermittelt wurden. Aus diesen zehn Werten wurden die vorstehend bereits erwähnte Standardabweichung und Mittelabweichung berechnet.

Ferner sind durch die in Deutschland geltenden Gesetze hinsichtlich des Gewichts von 103,35 g absolute Eichfehlergrenzen vorgegeben, die insbesondere bei Preisauszeichnern von Relevanz sind. Die untere absolute Eichfehlergrenze liegt im vorliegenden Fall bei 102,60 g die obere absolute Eichfehlergrenze bei 104,10 g. Da alle zehn dynamisch ermittelten Gewichtswerte des Produkts Nr. 1 innerhalb dieses Bereichs liegen, wäre also in diesem Fall auch eine Prüfung auf die absoluten Eichfehlergrenzen positiv verlaufen. Eine solche Prüfung wurde jedoch im Rahmen der Parametrierung gemäß vorstehendem Ausdruck nicht gefordert, weshalb im Ausdruck angegeben ist "keine Prüfung auf Y(a)".

Hinsichtlich der Ermittlung des auf das Gewicht bezogenen Vertrauensbereichs zwischen 90,1 g und 118,1 g wurde folgendermaßen vorgegangen:
Es wurde bezüglich aller drei gewogenen Packungen das größte und das kleinste Gewicht ermittelt. Das kleinste ermittelte Gewicht (Packung Nr. 3) liegt bei 100,10 g, das größte Gewicht (Packung Nr. 2) liegt bei 107,40 g. Die Untergrenze des Vertrauensbereichs wird nun dadurch berechnet, dass der genannte Minimalwert um ungefähr 10 % reduziert wird und der genannte Maximalwert um ungefähr 10 % erhöht wird.

Im Rahmen der Datensatz-Speicherung nach der erfindungsgemäßen Verifizierung - unter anderem auch zum Zwecke einer späteren Überprüfung - können alle im Ausdruck angezeigten Werte einschließlich eines Prüfzeitpunkts gespeichert werden, wobei es nicht unbedingt nötig ist, die im Rahmen der statischen und dynamischen Wiegungen ermittelten Einzelgewichte zu speichern.

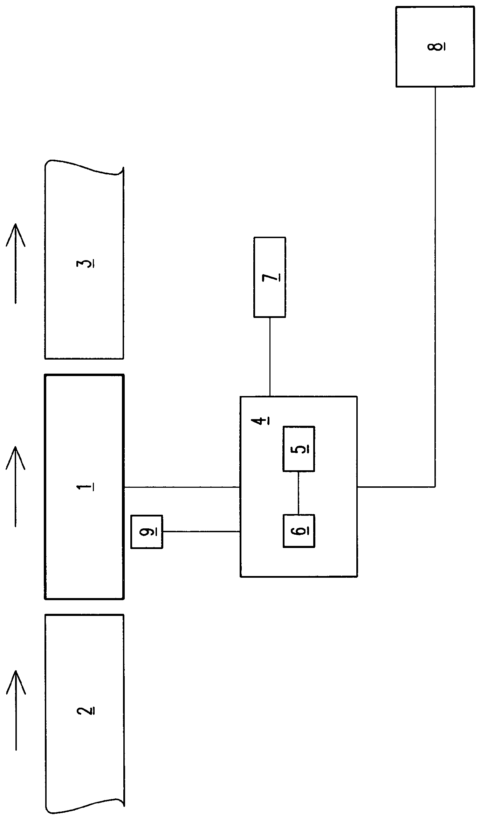

Die einzige Figur zeigt ein Prinzipschaubild einer Vorrichtung zur Durchführung des erfindungsgemäßen Verfahrens.

An ein Wägeband 1 grenzt ein einlaufseitiges Förderband 2 sowie ein auslaufseitiges Förderband 3 an, so dass in einem Produktförderprozess befindliche Produkte vom Förderband 2 auf das Wägeband 1 und von dort auf das Förderband 3 gelangen.

Das Wägeband 1 ist mit einer Kontrolleinheit 4 verbunden, welche zur Durchführung des erfindungsgemäßen Verfahrens einen Mikroprozessor 5 sowie einen Speicher 6 aufweist, in welchem gegen Manipulation gesicherte Datensätze abspeicherbar sind.

Die Kontrolleinheit 4 ist ferner mit einer Eingabeeinheit 7 gekoppelt, über die beispielsweise der Kontrolleinheit 4 produktspezifische Daten zur Verfügung gestellt werden können. Ferner ist an die Kontrolleinheit 4 ein Preisauszeichnungssystem 8 angeschlossen, welches von der Kontrolleinheit 4 in Abhängigkeit von den ermittelten Gewichtswerten angesteuert wird. Schließlich ist ein Temperatursensor 9 mit der Kontrolleinheit 4 gekoppelt, der dazu ausgelegt ist, die Umgebungstemperatur des Wägebands 1 zu ermitteln.

Die beschriebenen Komponenten können in der bereits erläuterten Weise miteinander kommunizieren und somit das erfindungsgemäße Verfahren und dessen bevorzugte Ausführungsformen realisieren.

## Patentansprüche

1. Verfahren zur Parametrierung von Waagen, welche ein Wägeband (1) zum Wiegen von in einem Förderprozess befindlichen Produkten aufweisen, bei dem
- in einem ersten Schritt produktspezifische Daten in eine Kontrolleinheit (4) eingegeben werden, die zur Ermittlung von Steuerparametern herangezogen werden,
- in einem zweiten Schritt zumindest ein Produkt statisch bei stillstehendem Wägeband (1) und dynamisch bei laufendem Wägeband (1) gewogen wird und automatisiert eine an das jeweilige Produkt angepasste und auf den zeitlichen Verlauf eines Gewichtssignals anzuwendende Filterfunktion bestimmt,
- in einem dritten Schritt mittels des Wiegens von Produkten automatisch verifiziert wird, ob die unter Verwendung der zuvor ermittelten Steuerparameter und der zuvor bestimmten Filterfunktion erhaltenen Gewichtswerte innerhalb vorgegebener Toleranzen liegen,
- wobei nur bei positiv verlaufener Verifizierung in der Kontrolleinheit (4) ein gegen Manipulation gesicherter Datensatz gespeichert wird, welcher zumindest die Steuerparameter, die Filterfunktion und eine Produktkennung umfasst.

2. Verfahren nach Anspruch 1,
**dadurch gekennzeichnet,**
**dass** die Parametrierungsschritte interaktiv in einer vorgegebenen, von der Kontrolleinheit (4) erzwungenen Reihenfolge durchgeführt werden.

3. Verfahren nach einem der vorhergehenden Ansprüche,
**dadurch gekennzeichnet,**
**dass** die im ersten Schritt einzugebenden produktspezifischen Daten ein Nenngewicht oder einen Nenngewichtsbereich, eine Fördergeschwindigkeit, einen Produktdurchsatz, eine Produktlänge, eine Produktlängentoleranz und/oder eine Produktkennung umfassen.

4. Verfahren nach einem der vorhergehenden Ansprüche,
**dadurch gekennzeichnet,**
**dass** das Wägeband (1) beim dynamischen Wiegen während des zweiten Schritts mit einer im ersten Schritt eingegebenen Fördergeschwindigkeit betrieben wird.

5. Verfahren nach einem der vorhergehenden Ansprüche,
**dadurch gekennzeichnet,**
**dass** während des zweiten Schritts zumindest ein Produkt einmal statisch bei stillstehendem Wägeband (1) und mehrmals, insbesondere zehnmal, dynamisch bei laufendem Wägeband (1) gewogen wird und/oder
**dass** während des zweiten Schritts zwei bis fünf, insbesondere drei unterschiedliche Produkte gewogen werden.

6. Verfahren nach einem der vorhergehenden Ansprüche,
**dadurch gekennzeichnet,**
**dass** das Produkt aus der Anzahl der im zweiten Schritt gewogenen Produkte und der Anzahl der dynamischen Wiegungen jedes dieser Produkte Werte zwischen 10 und 200, insbesondere zwischen 20 und 40 annimmt, und/oder
**dass** im zweiten Schritt die Filterfunktion in Abhängigkeit von den zeitlichen Verläufen der während des zweiten Schritts ermittelten Gewichtssignale und den eingegebenen produktspezifischen Daten bestimmt wird.

7. Verfahren nach einem der vorhergehenden Ansprüche,
**dadurch gekennzeichnet,**
**dass** während des dritten Schritts zumindest ein Produkt statisch bei stillstehendem Wägeband (1) und dynamisch bei laufendem Wägeband (1) gewogen wird, wobei insbesondere das Wägeband (1) beim dynamischen Wiegen mit der im ersten Schritt eingegebenen Fördergeschwindigkeit betrieben wird.

8. Verfahren nach einem der vorhergehenden Ansprüche,
**dadurch gekennzeichnet,**
**dass** während des dritten Schritts zumindest ein Produkt einmal statisch bei stillstehendem Wägeband (1) und mehrmals, insbesondere zehnmal, dynamisch bei laufendem Wägeband (1) gewogen wird und/oder
**dass** während des dritten Schritts zwei bis fünf, insbesondere drei unterschiedliche Produkte gewogen werden.

9. Verfahren nach einem der vorhergehenden Ansprüche,
**dadurch gekennzeichnet,**
**dass** das Produkt aus der Anzahl der im dritten Schritt gewogenen Produkte und der Anzahl der dynamischen Wiegungen jedes dieser Produkte Werte zwischen 10 und 200, insbesondere zwischen 20 und 40 annimmt, und/oder
**dass** für die mit den dynamischen Wiegevorgängen des dritten Schritts bestimmten Gewichtswerte Standardabweichung und/oder Mittelabweichung ermittelt werden und/oder dass für die mit den dynamischen Wiegevorgängen des dritten Schritts bestimmten Gewichtswerte ermittelt wird, ob sie innerhalb fest vorgegebener Eichfehlergrenzen liegen, wobei insbesondere am Ende des dritten Schritts festgestellt wird,
- ob die ermittelte Standardabweichung und/oder Mittelabweichung innerhalb vorgegebener Grenzwerte liegt und/oder
- ob die ermittelten Gewichtswerte innerhalb der fest vorgegebenen Eichfehlergrenzen liegen,
wobei im positiven Fall der gegen Manipulation gesicherte Datensatz dauerhaft gespeichert wird.

10. Verfahren nach einem der vorhergehenden Ansprüche,
**dadurch gekennzeichnet,**
**dass** der gegen Manipulation gesicherte Datensatz als unaktivierbar gekennzeichnet, jedoch nicht vollständig gelöscht werden kann und/oder
**dass** der gegen Manipulation gesicherte Datensatz zusätzlich ein Verifizierungsdatum, einen Verifizierungszeitpunkt, eine auf die jeweilige Verifizierung bezogene laufende Nummer, einen auf die jeweilige Verifizierung bezogenen Benutzercode und/oder zumindest einen Prüfschlüssel umfasst.

11. Verfahren nach einem der vorhergehenden Ansprüche,
**dadurch gekennzeichnet,**
**dass** der gegen Manipulation gesicherte Datensatz oder ein Teil desselben in einem gesicherten Speichermedium (6) gespeichert wird, und/oder
**dass** der gegen Manipulation gesicherte Datensatz oder ein Teil desselben gemeinsam mit einem individuell berechneten Prüfschlüssel gespeichert wird.

12. Verfahren zum Betrieb einer gemäß einem der vorhergehenden Ansprüche parametrierten Waage,
**dadurch gekennzeichnet,**
die Waage ausschließlich mit gegen Manipulation gesicherten Datensätzen oder mit einem niedrigen, von einer Zulassungsstelle produkttypunabhängig zugelassenen Durchsatz betrieben werden kann, wobei insbesondere
- zu Beginn des Betriebs derjenige gegen Manipulation gesicherte Datensatz aktiviert wird, dessen Produktkennung mit einer zu Beginn des Betriebs eingegebenen oder erfassten Produktkennung übereinstimmt, und/oder
- während des Betriebs derjenige gegen Manipulation gesicherte Datensatz aktiviert wird, dessen Produktkennung mit einer am Produkt befindlichen Produktkennung übereinstimmt, wobei die Produktkennung insbesondere automatisch mittels eines optischen oder elektronischen Lesegeräts ermittelt wird.

13. Verfahren nach Anspruch 12,
**dadurch gekennzeichnet,**
**dass** die Waage als Kontrollwaage eingesetzt wird.

14. Verfahren nach einem der vorhergehenden Ansprüche,
**dadurch gekennzeichnet,**
**dass** bei der Parametrierung im ersten Schritt ein Nenngewichtsbereich mit einer Obergrenze und einer Untergrenze eingegeben wird oder im zweiten und/oder dritten Schritt eine Obergrenze und eine Untergrenze ermittelt wird und dass beim Betrieb der Waage nur diejenigen Produkte akzeptiert werden, deren ermitteltes Gewicht die Obergrenze nicht um mehr als einen vorgegebenen Toleranzwert überschreitet oder deren ermitteltes Gewicht die Untergrenze nicht um mehr als einen vorgegebenen Toleranzwert unterschreitet, wobei insbesondere ein Akzeptieren dann stattfindet, wenn die Obergrenze nicht um mehr als x% überschritten oder die Untergrenze nicht um mehr als y% unterschritten wird, wobei gilt: 0 ≤ x ≤ 20 und 0 ≤ y ≤ 20.

15. Verfahren nach einem der vorhergehenden Ansprüche,
**dadurch gekennzeichnet,**
**dass** bei der Parametrierung im ersten Schritt ein Produktabmessungsbereich mit einer Obergrenze und einer Untergrenze eingegeben wird oder im zweiten und/oder dritten Schritt eine Obergrenze und eine Untergrenze ermittelt wird und dass beim Betrieb der Waage nur diejenigen Produkte akzeptiert werden, deren ermittelte Abmessungen die Obergrenze nicht um mehr als einen vorgegebenen Toleranzwert überschreiten oder deren ermittelte Abmessungen die Untergrenze nicht um mehr als einen vorgegebenen Toleranzwert unterschreiten, wobei insbesondere ein Akzeptieren dann stattfindet, wenn die Obergrenze nicht um mehr als x% überschritten oder die Untergrenze nicht um mehr als y% unterschritten wird, wobei gilt: 0 ≤ x ≤ 20 und 0 ≤ y ≤ 20.

16. Verfahren nach einem der vorhergehenden Ansprüche,
**dadurch gekennzeichnet,**
**dass** während der Parametrierung mittels eines Temperatursensors (9) die bei der Parametrierung gegebene Umgebungstemperatur ermittelt und ein Betrieb der Waage bei solchen Temperaturen
- entweder gesperrt oder
- nur mit einer niedrigen, von einer Zulassungsstelle unabhängig vom jeweiligen Produkttyp zugelassenen Leistung erlaubt
wird, die außerhalb eines Temperaturbereichs liegen, der die während der Parametrierung ermittelte Umgebungstemperatur einschließt, wobei insbesondere die Untergrenze des Temperaturbereichs x°C unterhalb der während der Parametrierung ermittelten Umgebungstemperatur und die Obergrenze des Temperaturbereichs y°C oberhalb dieser Umgebungstemperatur liegt, wobei gilt: 1 ≤ x ≤ 10 und 1 ≤ y ≤ 10.

17. Verwendung einer Waage in einem Verfahren nach einem der Ansprüche 1 bis 12 und 14 bis 16 in Verbindung mit einem Preisauszeichnungssystem (8).

## Claims

1. A method for the parameterization of scales which have a weighing belt (1) for the weighing of products in a conveying process, wherein
- in a first step, product-specific data are input into a control unit (4) which are used for the determination of control parameters;
- in a second step, at least one product is weighed statically with a stationary weighing belt (1) and dynamically with the weighing belt (1) running and a filter function is determined in an automated manner which is matched to the respective product and which is to be applied to the time-dependent course of a weight signal;
- in a third step, automatic verification is made by means of the weighing of products whether the weight values obtained using the previously determined control parameters and the previously determined filter function lie within preset tolerances,
- with a data set which is secured against manipulation and which comprises at least the control parameters, the filter function and a product identification only being stored in the control unit (4) with a positive verification.

2. A method in accordance with claim 1,
**characterized in that**
the parameterization steps are carried out interactively in a preset order enforced by the control unit (4).

3. A method in accordance with one of the preceding claims,
**characterized in that**
the product-specific data to be input in the first step comprise a nominal weight or a nominal weight range, a conveying speed, a product throughput, a product length, a product length tolerance and/or a product identification.

4. A method in accordance with any one of the preceding claims,
**characterized in that**
the weighing belt (1) is operated at a conveying speed input in the first step in the dynamic weighing during the second step.

5. A method in accordance with any one of the preceding claims,
**characterized in that**
at least one product is weighed once statically with a stationary weighing belt (1) and multiple times, in particular ten times, dynamically with the weighing belt (1) running during the second step;
and/or
**in that** two to five different products, in particular three different products, are weighed during the second step.

6. A method in accordance with any one of the preceding claims,
**characterized in that**
the product from the number of the products weighed in the second step and from the number of the dynamic weighings of each of these products adopts values between 10 and 200, in particular between 20 and 40; and/or
**in that** the filter function is determined in the second step in dependence on the time-dependent courses of the weight signals determined during the second step and on the input product-specific data.

7. A method in accordance with any one of the preceding claims,
**characterized in that**
at least one product is weighed statically with a stationary weighing belt (1) and dynamically with the weighing belt (1) running during the third step, with the weighing belt (1) in particular being operated at the conveying speed input in the first step in the dynamic weighing.

8. A method in accordance with any one of the preceding claims,
**characterized in that**
at least one product is weighed once statically with a stationary weighing belt (1) and multiple times, in particular ten times, dynamically with the weighing belt (1) running during the third step; and/or
**in that** two to five different products, in particular three different products, are weighed during the third step.

9. A method in accordance with any one of the preceding claims,
**characterized in that**
the product from the number of the products weighed in the third step and from the number of the dynamic weighings of each of these products adopts values between 10 and 200, in particular between 20 and 40; and/or
**in that** a standard deviation and/or mean deviation is/are determined for the weight values determined with the dynamic weighing procedures of the third step; and/or
**in that** a determination is made for the weight values determined with the dynamic weighing procedures of the third step whether they are within fixedly preset calibration error limits, with it in particular being determined at the end of the third step
- whether the determined standard deviation and/or mean deviation is/are within preset limit values and/or
- whether the determined weight values are within the fixedly preset calibration error limits,
with the data set secured against manipulation being stored permanently in the positive case.

10. A method in accordance with any one of the preceding claims,
**characterized in that**
the data set secured against manipulation can be marked as non-activatable, but cannot be completely deleted;
and/or
**in that** the data set secured against manipulation additionally comprises a verification date, a verification time, a running number related to the respective verification, a user code related to the respective verification and/or at least one check key.

11. A method in accordance with any one of the preceding claims,
**characterized in that**
the data set secured against manipulation or a part thereof is stored on a secured memory medium (6);
and/or
**in that** the data set secured against manipulation or a part of the same is stored together with an individually calculated check key.

12. A method for the operation of scales parameterized in accordance with any one of the preceding claims,
**characterized in that**
the scales can only be operated using data sets secured against manipulation or with a low throughput licensed by a licensing office independently of the product type, wherein in particular
- that data set secured against manipulation is activated at the start of operation whose product identification coincides with a product identification input or detected at the start of operation; and/or
- **in that** that data set secured against manipulation is activated during operation whose product identification coincides with a product identification located at the product, with the product identification in particular being determined automatically by means of an optical or electronic reading device.

13. A method in accordance with claim 12,
**characterized in that**
the scales are used as control scales.

14. A method in accordance with any one of the preceding claims,
**characterized in that**
a nominal weight range having an upper limit and a lower limit is input in the parameterization in the first step or an upper limit and a lower limit are determined in the second and/or third steps; and **in that** only those products are accepted in the operation of the scales whose determined weight does not exceed the upper limit by more than a preset tolerance value or whose determined weight does not fall below the lower limit by more than a preset tolerance value, with an acceptance in particular taking place when the upper limit is not exceeded by more than x% or the lower limit is not fallen below by more than y%, with 0 ≤ x 20 and 0 ≤ y ≤ 20 applying.

15. A method in accordance with any one of the preceding claims,
**characterized in that**
a product dimension range having an upper limit and a lower limit is input in the parameterization in the first step or an upper limit and a lower limit are determined in the second and/or third steps; and **in that** only those products are accepted in the operation of the scales whose determined dimensions do not exceed the upper limit by more than a preset tolerance value or whose determined dimensions do not fall below the lower limit by more than a preset tolerance value, with an acceptance in particular taking place when the upper limit is not exceeded by more than x% or the lower limit is not fallen below by more than y%, with 0 ≤ x ≤ 20 and 0 ≤ y ≤ 20 applying.

16. A method in accordance with any one of the preceding claims,
**characterized in that**
the ambient temperature given in the parameterization is determined during the parameterization by means of a temperature sensor (9) and an operation of the scales at such temperatures is
- either blocked or
- is only allowed at a low performance licensed by a licensing office independently of the respective product type
which are outside a temperature range which includes the ambient temperature determined during the parameterization, with the lower limit of the temperature range in particular being x°C beneath the ambient temperature determined during the parameterization and the upper limit of the temperature range being y°C above this ambient temperature, with 1 ≤ x ≤ 10 and 1 ≤ y ≤ 10 applying.

17. Use of scales in a method in accordance with any one of the claims 1 to 12 and 14 to 16 in connection with a price labeling system (8).

## Revendications

1. Procédé de paramétrage de balances qui comprennent une bande de pesage (1) pour peser des produits qui sont en cours de convoyage, dans lequel
- dans une première étape, on saisit des données spécifiques aux produits dans une unité de contrôle (4), qui servent à déterminer des paramètres de commande,
- dans une seconde étape, on pèse au moins un produit statiquement, la bande de pesage (1) étant à l'arrêt, et dynamiquement, la bande de pesage (1) étant en circulation, et on définit automatiquement une fonction de filtrage adaptée au produit respectif et à appliquer à l'évolution temporelle d'un signal pondéral,
- dans une troisième étape, par pesage de produits, on vérifie automatiquement si les valeurs pondérales obtenues en utilisant les paramètres de commande déterminés auparavant et la fonction de filtrage définie auparavant, se situent à l'intérieur de tolérances données,
- uniquement en cas de vérification positive, on mémorise dans l'unité de contrôle (4) un ensemble de données sécurisé à l'encontre d'une manipulation, qui comprend au moins les paramètres de commande, la fonction de filtrage et un identifiant de produits.

2. Procédé selon la revendication 1,
**caractérisé en ce que**
on exécute les étapes de paramétrage de façon interactive dans un ordre donné imposé par l'unité de contrôle (4).

3. Procédé selon l'une des revendications précédentes,
**caractérisé en ce que**
les données spécifiques aux produits à saisir dans la première étape incluent un poids nominal ou une plage de poids nominal, une vitesse de convoyage, un débit de produit, une longueur de produit, une plage de longueur de produit et/ou un identifiant de produit.

4. Procédé selon l'une des revendications précédentes,
**caractérisé en ce que**
lors du pesage dynamique pendant la seconde étape, on fait fonctionner la bande de pesage (1) à une vitesse de convoyage saisie pendant la première étape.

5. Procédé selon l'une des revendications précédentes,
**caractérisé en ce que**
pendant la seconde étape, on pèse au moins un produit une fois statiquement, la bande de pesage (1) étant à l'arrêt, et plusieurs fois, en particulier dix fois, dynamiquement, la bande de pesage (1) étant en circulation, et/ou
pendant la seconde étape, on pèse deux à cinq, en particulier trois produits différents.

6. Procédé selon l'une des revendications précédentes,
**caractérisé en ce que**
parmi le nombre de produits pesés dans la seconde étape et parmi le nombre des pesages dynamiques de chacun de ces produits, le produit prend des valeurs comprises entre 10 et 200, en particulier entre 20 et 40, et/ou
dans la seconde étape, on définit la fonction de filtrage en fonction des évolutions temporelles des signaux pondéraux déterminés dans la seconde étape et des données saisies spécifiques aux produits.

7. Procédé selon l'une des revendications précédentes,
**caractérisé en ce que**
lors de la troisième étape, on pèse au moins un produit statiquement, la bande de pesage (1) étant à l'arrêt, et dynamiquement, la bande de pesage (1) étant en circulation, et pendant le pesage dynamique, on fait fonctionner la bande de pesage (1) en particulier à la vitesse de convoyage saisie pendant la première étape.

8. Procédé selon l'une des revendications précédentes,
**caractérisé en ce que**
pendant la troisième étape, on pèse au moins un produit une fois statiquement, la bande de pesage (1) étant à l'arrêt, et plusieurs fois, en particulier dix fois, dynamiquement, la bande de pesage (1) étant en circulation, et/ou
pendant la troisième étape, on pèse deux à cinq, en particulier trois produits différents.

9. Procédé selon l'une des revendications précédentes,
**caractérisé en ce que**
parmi le nombre de produits pesés dans la troisième étape et parmi le nombre de pesages dynamiques de chacun de ces produits, le produit prend des valeurs comprises entre 10 et 200, en particulier entre 20 et 40, et/ou
pour les valeurs pondérales définies par les opérations de pesage dynamiques de la troisième étape, on détermine un écart standard et/ou un écart moyen, et/ou
pour les valeurs pondérales définies par les opérations de pesage dynamiques de la troisième étape, on détermine si elles se trouvent à l'intérieur des erreurs maximales tolérées fermement prédéfinies, et en particulier à la fin de la troisième étape on constate
- si l'écart standard et/ou l'écart moyen déterminé se trouve à l'intérieur de valeurs limites prédéfinies,
et/ou
- si les valeurs pondérales déterminées se trouvent à l'intérieur d'erreurs maximales tolérées fermement prédéfinies,
et dans le cas positif, on mémorise durablement l'ensemble de données sécurisé à l'encontre d'une manipulation.

10. Procédé selon l'une des revendications précédentes,
**caractérisé en ce que**
on peut caractériser comme inactivable l'ensemble de données sécurisé à l'encontre d'une manipulation, mais on ne peut pas l'effacer complètement, et/ou
l'ensemble de données sécurisé à l'encontre d'une manipulation inclut en supplément une date de vérification, un instant de vérification, un numéro courant relatif à la vérification respective, un code d'utilisateur relatif à la vérification respective et/ou au moins une clé de contrôle.

11. Procédé selon l'une des revendications précédentes,
**caractérisé en ce que**
on mémorise l'ensemble de données sécurisé à l'encontre d'une manipulation ou bien une partie de celui-ci dans un moyen de mémorisation sécurisé (6),
et/ou
on mémorise l'ensemble de données sécurisé à l'encontre d'une manipulation ou une partie de celui-ci conjointement avec une clé de contrôle calculée individuellement.

12. Procédé de fonctionnement d'une balance paramétrée selon l'une des revendications précédentes,
**caractérisé en ce que**
on peut faire fonctionner la balance exclusivement avec des ensembles de données sécurisés à l'encontre d'une manipulation ou avec un faible débit admis par un organisme réglementaire indépendamment du type de produit, et en particulier
- au début du fonctionnement, on fait activer celui des ensembles de données sécurisés à l'encontre d'une manipulation dont l'identifiant de produit coïncide avec un identifiant de produit saisi ou détecté au début du fonctionnement,
et/ou
- pendant le fonctionnement, on fait activer celui des ensembles de données sécurisés à l'encontre d'une manipulation dont l'identifiant de produit coïncide avec un identifiant de produit situé sur le produit saisi, l'identifiant de produit étant déterminé en particulier automatiquement au moyen d'un appareil de lecture optique ou électronique.

13. Procédé selon la revendication 12,
**caractérisé en ce que**
l'on utilise la balance à titre de balance de contrôle.

14. Procédé selon l'une des revendications précédentes,
**caractérisé en ce que**
lors du paramétrage, dans la première étape, on saisit une plage de poids nominal avec une limite supérieure et avec une limite inférieure, ou dans la seconde et/ou dans la troisième étape, on détermine une limite supérieure et une limite inférieure, et lors du fonctionnement de la balance, on n'accepte que ceux des produits dont le poids déterminé ne passe pas plus d'une valeur de tolérance prédéfinie au-dessus de la limite supérieure, ou dont le poids déterminé ne passe pas plus d'une valeur de tolérance prédéfinie au-dessous de la limite inférieure, une acceptation ayant lieu en particulier lorsque l'on ne passe pas plus de x % au-dessus de la limite supérieure ou lorsque l'on ne passe pas plus de y % au-dessous de la limite inférieure, étant entendu que: 0 ≤ x ≤ 20 et 0 ≤ y ≤ 20.

15. Procédé selon l'une des revendications précédentes,
**caractérisé en ce que**
lors du paramétrage, dans la première étape, on saisit une plage de dimension de produit avec une limite supérieure et avec une limite inférieure, ou dans la seconde et/ou dans la troisième étape, on détermine une limite supérieure et une limite inférieure, et lors du fonctionnement de la balance, on n'accepte que ceux des produits dont les dimensions déterminées ne passent pas plus d'une valeur de tolérance prédéfinie au-dessus de la limite supérieure, ou dont les dimensions déterminées ne passent pas plus d'une valeur de tolérance prédéfinie au-dessous de la limite inférieure, une acceptation ayant lieu en particulier lorsque l'on ne passe pas plus de x % au-dessus de la limite supérieure ou lorsque l'on ne passe pas plus de y % au-dessous de la limite inférieure, étant entendu que: 0 ≤ x ≤ 20 et 0 ≤ y ≤ 20.

16. Procédé selon l'une des revendications précédentes,
**caractérisé en ce que**
pendant le paramétrage, au moyen d'un capteur de température (9), on détermine la température ambiante présente pendant le paramétrage, et un fonctionnement de la balance
- est soit bloqué
- soit permis uniquement à une faible puissance admisse par un organisme réglementaire indépendamment du type de produit respectif,
à de telles températures qui sont à l'extérieur d'une plage de températures qui inclut la température ambiante déterminée pendant le paramétrage, et en particulier la limite inférieure de la plage de température est de x °C au-dessous de la température ambiante déterminée pendant le paramétrage et la limite inférieure de la plage de température est de y °C au-dessus de cette température ambiante, étant entendu que : 1 ≤ x ≤ 10 et 1 ≤ y ≤ 10.

17. Utilisation d'une balance dans un procédé selon l'une des revendications 1 à 12 et 14 à 16 en association avec un système d'étiquetage de prix (8).
